# EUROPÄISCHE PATENTSCHRIFT

(11) **EP 0 431 486 B1**
(45) Veröffentlichungstag und Bekanntmachung des Hinweises auf die Patenterteilung: **25.09.2002**
(21) Anmeldenummer: 90122916.1
(22) Anmeldetag: 30.11.1990
(51) Int. Cl.: D01G 15/36, H02J 3/30

(54) **Netzausfall in der Karderie**
Power failure in a card room
Panne de secteur dans une carderie

(30) Priorität: 07.12.1989 CH 440389
(43) Veröffentlichungstag der Anmeldung: 12.06.1991
(73) Patentinhaber: MASCHINENFABRIK RIETER AG, CH-8406 Winterthur (CH)
(72) Erfinder: Röösli, Hans, CH-8303 Bassersdorf (CH); Müller, Christian, CH-9500 Wil SG (CH); Demuth, Robert, CH-8309 Nürensdorf (CH)

(56) Entgegenhaltungen:
- BE-A- 675 331
- CH-A- 581 714
- DE-A- 3 347 113
- DE-A- 3 633 627
- DE-A- 3 708 211
- FR-A- 2 252 684
- US-A- 4 172 692
- US-A- 4 339 779

## Beschreibung

Die Erfindung liegt im Gebiet der Textiltechnik und bezieht sich auf ein Verfahren und eine Vorrichtung zur Ueberbrückung von Störungen des Speisenetzes während dem Betrieb von Textilmaschinen, insbesondere bei einer Kardiermaschine.

Karden, wie auch andere Maschinen in einer Spinnerei verwenden in zunehmendem Masse sogenannte Frequenzumrichter-Antriebe, die es gestatten, die Drehzahl von Wechselstrom-Motoren in einem grossen Bereich zu variieren (siehe z.B. DOS 3708211 und DD 240569). Siehe aber auch:
- "Textile Applications of Adjustable-Frequency Drives with Digital Ratio Control" von Edward H. Dinger (IEEE Transations on Industry Applications, Vol. (A - 8, No. 1, January/February 1972),
- "Elektrische Antriebe für die Kunstfaserherstellung" von F. Horvath (Elektro-Anzeiger vom 27.10.1971),
- "Frequenzgeber für SIMOVERT-Zwischenkreisumrichter" von Dietrich Kraupe und Wilhelm Linden (Siemens-Zeitschrift 45, Heft 9, 1971),
- "Applying Adjustable Frequency Invertors for Motor Speed Control" von C.D. Helwick und K. Lipman (AUTOMATION, May 1964),
- "Siemosyn-Motoren und statischer Umrichter" von Dipl.-Ing. A. Roch (Melliand Textilberichte, 12/1965, Seiten 1357 bis 1362).

Durch diese Mittel ist eine automatisierte Optimierung des Prozesses überhaupt erst möglich geworden. Die Messung und Rückführung von Daten über Achsposition resp. Achsgeschwindigkeit eines Motors in die Umrichterelektronik ermöglicht es zudem auf einfache Weise eine hohe Konstanz der Drehzahl zu erreichen. Dies ist eine eindeutige Verbesserung, bspw. dort, wo hohe Anforderungen an Gleichlaufgenauigkeit und Drehzahlkonstanz der Antriebselemente gestellt werden und auch dort, wo solche Antriebselemente untereinander in einem ganz bestimmten Drehzahlverhältnis stehen sollen. Solche Antriebsanordnungen mit modernen Motoren, die an einem statischen Umrichternetzwerk betrieben werden, sind heute auch gegen Last- und Netzschwankungen nicht mehr so empfindlich, so dass schon eine grosse Bandbreite von häufig auftretenden Störungen überwacht und entgegengewirkt werden kann.

Wenn auch Netzschwankungen, insbesondere durch Lastwechsel hervorgerufen, mit diesen Mitteln begegnet werden können, so versagen sie jedoch bei Netzausfällen. Unter Netzausfällen sind hier Spannungsausfälle im Bereich von Millisekunden oder länger oder Spannungsabsenkungen, die einem Spannungsausfall gleichkommen, gemeint, welche sich von Spannungsschwankungen, wie sie oben diskutiert wurden, unterscheiden.

Bei Spannungsausfällen versagt in der Regel das Umrichternetzwerk, auch wenn es gut geregelt ist. Es versagt schlicht und einfach wegen der fehlenden Energie, die für kurze Zeit in der Zulieferung unterbleibt, was sich auf die Antriebseinheit nicht nur in Form einer "Schwankung" auswirken kann, sondern auch in Form eines abrupten Funktionsunterbruches. Solch ein nichtlineares Vorkommnis entzieht sich der Regelfähigkeit eines Regelnetzwerkes, wie es für eine solche Art von Antriebsverbund in der Regel eingesetzt wird.

Es ist auch bekannt, in verschiedenen Sparten der Spinnereimaschinenindustrie, einen "Energieausgleich" zwischen drehenden Elementen mit "überschüssiger" Energie und drehenden Elementen mit einem noch unerfüllten Energiebedarf herbeizuführen. Dies kann bekannterweise über den sogenannten Gleichstromzwischenkreis bewirkt werden - siehe z.B. CH PS 581 714 und EP-A-327 941. Es ist auch vorgeschlagen worden, dieses Prinzip im Spinnsaal zum gesicherten Durchführen eines sogenannten "Abspinnprogramms" bei einem längeren Netzausfall auszunutzen - siehe DOS 3347113 und DOS 3633627.

BE 675331 (= DE-A-1510410) befasst sich mit den Schwierigkeiten, die sich für den Betrieb eines Krempels bei einem Spannungsausfall ergeben, und insbesondere mit der Tatsache, dass der Hacker im Auslauf der Krempel wesentlich schneller als der Tambour zu Stillstand kommen würde. Damit würde ausser dem Reissen des Gutes auch ein Verstopfen der Krempel entstehen, wodurch stundenlange Säuberungsarbeiten erforderlich werden. Es wurde schon vorher vorgeschlagen, diese Schwierigkeiten durch Umschalten auf ein Hilfsnetz zu beheben. Diese Lösung wurde aber als aufwendig betrachtet, weil ausser der Batterie des Hilfsnetzes noch zusätzliche Drehzahlwächter für die Antriebe benötigt werden würden.

Die Aufgabe der Erfindung nach DE-A-1510410 bestand daher darin, einen anderen Weg zu suchen, der zu einer einfacheren und billigeren Lösung dieses Problems führt. Diese Aufgabe wurde nach DE-A-1510410 dadurch gelöst, dass zwischen Tambour bzw. Abnehmerwalzeantrieb und Hackerantrieb ein Kupplungsglied vorgesehen wurde, das bei Spannungsausfall selbsttätig einkuppelt. Durch diese mechanische Verbindung läuft dann der Hacker synchron mit dem Tambour aus. Dies ergab zwar keine optimale Güte des gerade in der Bearbeitung befindlichen Gutes, verhinderte aber doch das weit unangenehmere Verstopfen der Krempel und das Reissen des Gutes. Eine einfache und sichere Ausführungsform ergab sich dadurch, dass das Kupplungsglied, welches vorzugsweise aus einer Elektromagnetkupplung bestand, auf de Welle des Hackerantriebes angeordnet wurde und zur Momentübertragung von Tambour zum Hackerantrieb ein Keilriemen diente.

Demgegenüber besteht die Aufgabe der vorliegenden Erfindung darin, den Materialfluss zumindest bei einem relativ kurzen Netzausfall aufrechtzuerhalten.

Die Lösung der Aufgabe ergibt sich aus den Merkmalen des Anspruches 1. Weitere vorteilhafte Ausführungen sind in den abhängigen Ansprüchen aufgeführt.

Die zurückgewonnene Energie kann zur Aufrechterhaltung von vorbestimmten Betriebsverhältnissen zwischen Arbeitselementen der Karde ausgenutzt werden, wenn das wesentliche Abweichen von diesen Verhältnissen einen Bandbruch verursachen würden.

Es ist aber nicht besonders schwierig, die Karde wieder anlaufen zu lassen. Mindestens beim längeren Ausfall der Energieversorgung ist es ratsam, die aus der Karderie zurückgewonnene Energie zur Unterstützung des Antriebssystems für andere Maschinengruppen zu verwenden, um ein geordnetes Abspinn- bzw. Auslaufproramm zu ermöglichen. diese anderen Gruppen sind diejenigen, die Probleme entweder beim Wiederanlaufen oder beim Auslaufen hervorrufen, falls das Durchlaufen des Abspinn- bzw. Auflaufprogramms verunmöglicht wird. Ein solches Auslaufprogramm kann z.B. das Räumen von Förderkanälen der Putzerei umfassen, um Materialanhäufungen zu vermeiden. Das Programm könnte aber dafür sorgen, dass vorgegebene Betriebsverhältnisse beim Abspinnen von Spinnmaschinen herrschen, d.h. bei der Verlangsamung der Arbeitselemente der Maschinen von ihrer Betriebsdrehzahl bis zum Stillstand bei vorgegebenen Beziehungen zwischen den Geschwindigkeiten der bewegbaren Teile der Maschine.

Eine bevorzugte Ausführungsform der Erfindung wird nun nachstehend unter Zuhilfenahme folgender Figuren eingehend diskutiert:
- Figur 1: zeigt im Blockschema das Prinzip eines Frequenzumrichter-Antriebes,
- Figur 2: zeigt im Blockschema mehrere Antriebe gemäss Figur 1 in einer konventionellen Karde und anschliessender Bandablage,
- Figur 3: zeigt im Blockschema ein Netzwerk für Antriebsgruppen gemäss Figur 2, ausgeführt nach der Erfindung, und
- Figur 4: zeigt im Blockschema eine prioritäre Aufteilung von Antriebsgruppen in kritische und unkritische Verbraucher.

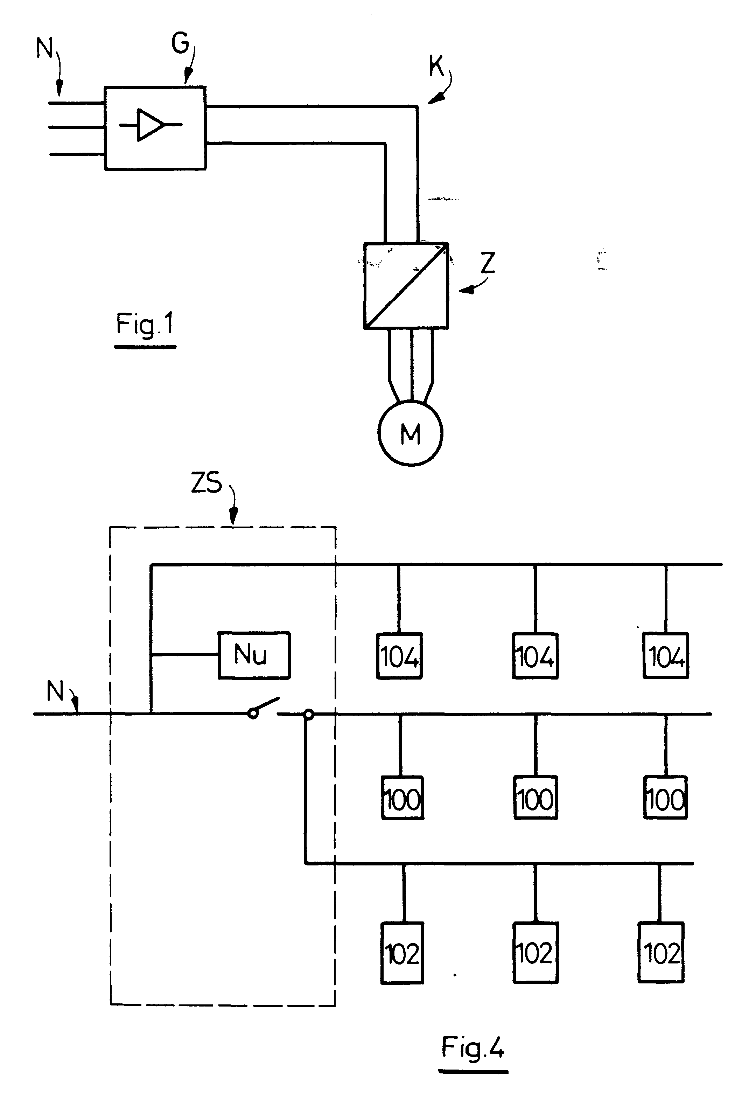

Das stark vereinfachte Schaltbild gemäss Figur 1 zeigt einen zwischen Netz N und Antrieb M geschalteten Frequenzumrichter. Aus dem Stromversorgungsnetz wird üblicherweise ein dreiphasiger Drehstrom, bspw. dreimal 380 Volt mit einer Frequenz von 50 Hz, durch eine Gleichrichterschaltung G in einen (pulsierenden) Gleichstrom umgesetzt. Dies wird zur Speisung von einem sogenannten Gleichstrom- (bzw. Gleichspannungs-)Zwischenkreis K benutzt. Durch eine Zerhackerschaltung Z wird diese Gleichspannung wiederum in eine dreiphasige Wechselspannung umgesetzt, welche zur Speisung eines Wechselstrommotors M verwendet wird. Die Drehzahl des Motors ist im wesentlichen proportional der angelegten Frequenz. Durch eine Steuerung der Frequenz des vom Zerhacker Z gelieferten Stromes kann somit die Drehzahl des Motors M eingestellt werden.

Eine solche Zerhackerschaltung Z arbeitet energiemässig in beide Richtungen. Im normalen Antriebsfall fliesst also die Energie in Richtung Motor M. Wird hingegen die Solldrehzahl reduziert, wodurch der Motor gebremst wird, wirkt dieser wegen seiner Massenträgheit als Generator und die im Motor erzeugte Energie fliesst in umgekehrter Richtung in den Gleichspannungs- (bzw. Gleichstrom-)Zwischenkreis K zurück. Da aber der Netzgleichrichter hingegen energiemässig nur in einer Richtung arbeitet, muss die vom Motor abgegebene Energie normalerweises durch einen sogenannten Bremswiderstand im Zwischenkreis vernichtet, oder besser gesagt, in Wärme umgesetzt werden.

Dieser Sachverhalt lässt sich nun für ein Energie-Management heranziehen, mit welchem das streng vorgegebene Drehzahlverhältnis einer Antriebsgruppe, wie sie bspw. in einer Karde mit anschliessender Bandablage vorkommt, trotz Netzausfall aufrechterhalten werden kann.

Antriebsgruppen, die durch ein Energie-Management gemäss Erfindung überwacht und bei Netzausfällen entsprechend geregelt werden, bestehen aus Einzelantrieben, bei denen mindestens ein angetriebener Teil zur Zeit des Netzausfalls eine deutlich höhere Menge kinetischer Energie aufweist als die anderen angetriebenen Teile der Gruppe. Am Beispiel einer Karde ist der Kardentambour die grösste der bewegten Massen einer Antriebsgruppe, die hier, wie schon gesagt, die ganze Karde und auch die Bandablage umfasst.

In dieser Anwendung werden die Kräfte an bewegten Körpern ausgenützt und die mechanische Arbeit daraus zur Ueberbrückung von Energieausfällen gewonnen. Die Schwungenergie des rotierenden Kardentambours übertrifft hier die Energie jedes einzelnen Antriebes bzw. angetriebenen Teils. Unter den angetriebenen Teilen gibt es bezüglich ihrem Beitrag zur Gesamtfunktion kritischere und weniger kritische Antriebe. So hat die Speisewalze, über die der Kardentambour beschickt wird, relativ wenig Schwungenergie, jedoch ist ihre Funktion kritisch im Verhältnis zur Drehzahl des Abnehmers. Verringert die Speisewalze ihre Drehzahl im Verhältnis zur Drehzahl des Abnehmers rapide, so wird das der Karde zugeführte Band reissen.

Dieser Umstand tritt bspw. bei einem Netzausfall oder einer starken Spannungsabsenkung ein, da der Energieunterschied zwischen dem Material-Speisemittel und dem Material-Abnahmemittel derart gross ist, dass sie sich bei einem Netzausfall völlig verschieden verhalten. Eine Drehzahlveränderung des Tambours hingegen (innerhalb gewisser Toleranzgrenzen) hat keine wesentlichen Auswirkungen auf den Materialfluss (allerdings aber auf die Qualität des Produktes). Während der Tambour noch minutenlang weiterdreht, bleibt die Speisewalze in weniger als einer Sekunde stehen, was zum Reissen des Kardenbandes führt. Dieser Zustand ist auch beim Wiedereinsetzen der Energie ohne Zusatzmassnahmen wie "Einfädeln" nicht mehr rückgängig zu machen. Somit darf dieser Vorgang bei einem optimalen Produktionsablauf einfach nicht eintreten.

Wird nun die abnehmende Schwungenergie des Kardentambours rekuperiert und mit der gewonnenen elektrischen Energie sowohl den Abnehmer wie auch die Speisewalze ständig angetrieben, so lässt sich bei adäquater Regelung das geforderte Drehzahlverhältnis zwischen Abnehmer und Speisewalze auch bei abnehmender Tambourdrehzahl stetig aufrecht erhalten. Das heisst, die Produktequalität nimmt wohl ab, aber es tritt kein singulärer Effekt auf, der im gleichen Prozessablauf nicht mehr rückgängig gemacht werden kann (ohne einzugreifen).

Dies lässt sich natürlich verallgemeinern und auch auf Gruppen von Antriebsgruppen anwenden. Das heisst, dass mit abklingenden Gruppen unkritischer Verbraucher Gruppen von kritischen Verbrauchern in Betrieb gehalten werden. Ein solches Verfahren lässt sich aber nur bei der Ueberbrückung relativ kurzfristiger Netzausfälle einsetzen.

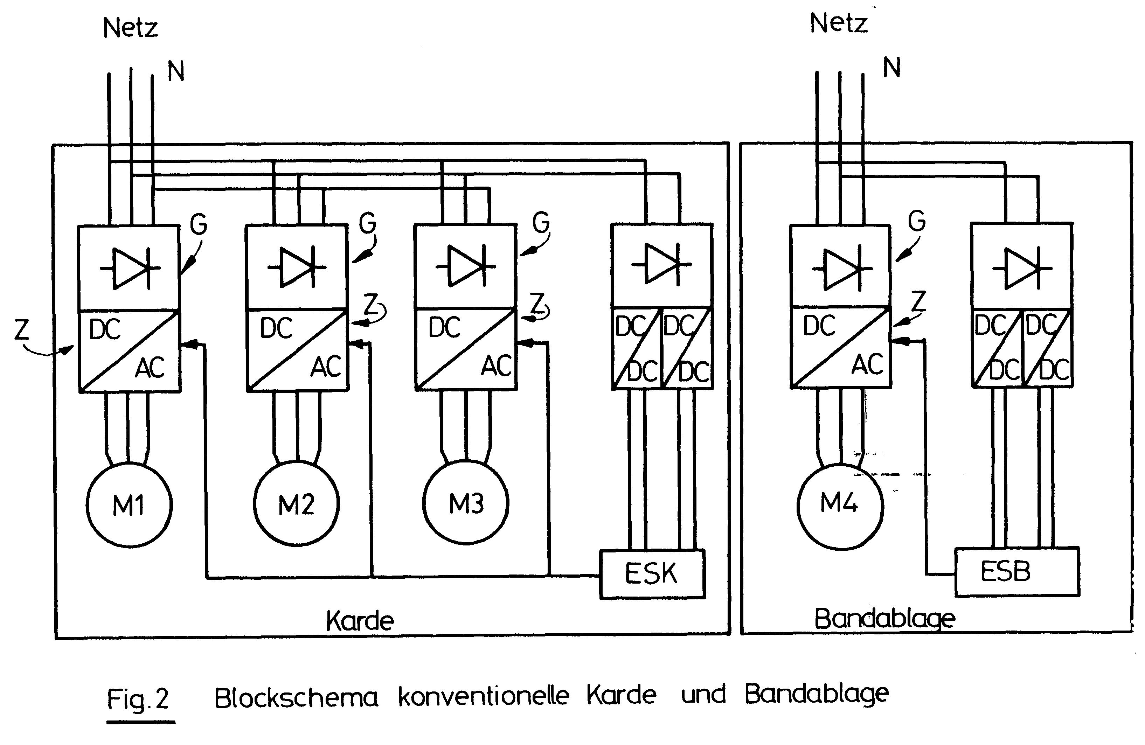

Basierend auf einer solchen Antriebstechnologie zeigt Figur 2 die stark vereinfachten Blockschaltbilder einer Karde mit Bandablage.

Der Hauptmotor (für den Antrieb des Tambours und Briseurs) ist mit M1 angedeutet, der Motor für den Antrieb der Speisewalze mit M2 und der Motor für den Antrieb des Abnehmers mit M3. Die Speisung der Elektronik-Steuerung ESK mit Energie geschieht über ein Schaltnetzteil SK. Die Bandablage umfasst einen weiteren Motor M4 und ein zweites Schaltnetzteil SB zur Speisung der Steuerungseinheit ESB der Bandablage. Obwohl in Figur 2 die Gleichstrom- (bzw. Gleichspannungs-)Zwischenkreise K für die einzelnen Motoren nicht gezeigt sind, müssen sie zwischen den jeweiligen Gleichrichtern G und Zerhackern Z nach dem in Figur 1 gezeigten Prinzip vorhanden sein.

Es ist daraus klar ersichtlich, dass dieselbe Funktion, nämlich die der Gleichrichterteile mehrmals vorkommt. Es ist zu erkennen, dass für die Erzeugung der für die Regel-Elektronik notwendigen Versorgungsspannungen mit Hilfe sogenannter Schaltnetzteile bewerkstelligt wird, die ähnlich wie die erwähnten Frequenzumrichter funktionieren, nur dass hier die Zwischenkreisspannung über Gleichstrom zu Gleichstrom-Konverter (DC/DC-Wandler) gewandelt wird. Zudem ist, in Figur 2 nicht dargestellt, in der Elektronik oft eine Batterie oder Akkumulator mit Schwebeladung eingebaut ist, um im Falle eines Netzausfalles wenigstens die Elektronik mit Energie zu versorgen. Dies ist erforderlich, um zumindest ein ordnungsgemässes Abschalten der Anlage sicher zu stellen.

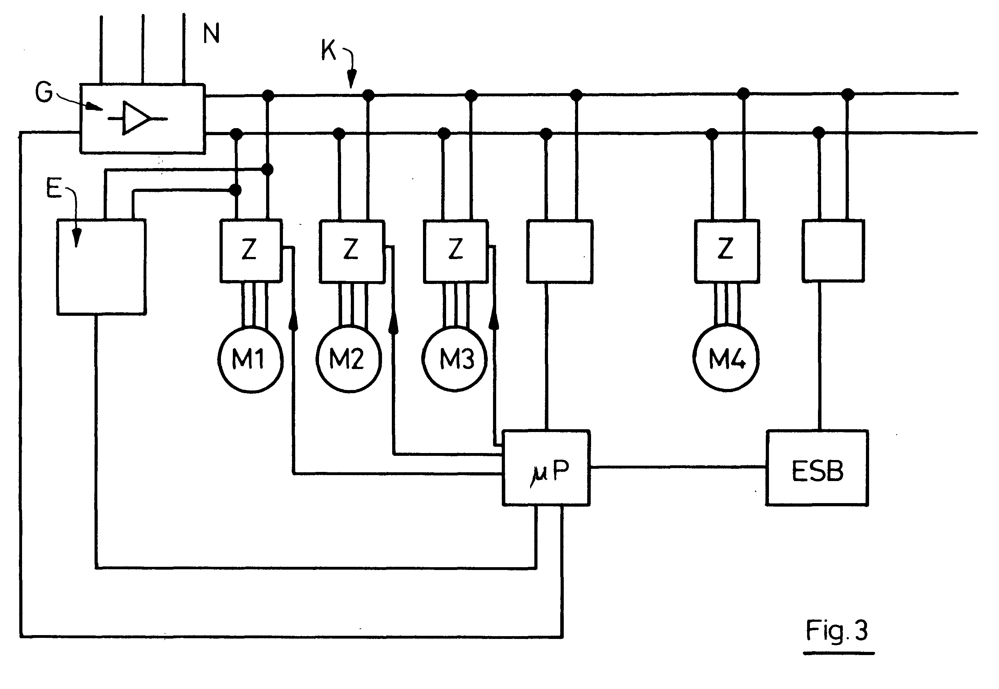

In der Anordnung nach Figur 3 ist statt einer Mehrzahl von Netzgleichrichtern nur noch einer (G) vorhanden, so dass alle Zerhacker Z nur an einem gemeinsamen Zwischenkreis K angeschlossen sind. Diese Anordnung führt gegenüber einer Lösung gemäss Figur 2 zu folgenden Vorteilen:
- Geringerer apparativer Aufwand durch wegfallende Netzgleichrichter, was nicht zu unterschätzen ist, da eine sorgfältig konstruierte Gleichrichtereinheit einen beträchtlichen Aufwand für Einschaltstrom-Begrenzung, Netzspannungsüberwachung, Oberwellenfilter zur Stromkorrektur, Filter gegen Netzstörungen etc. beinhaltet.
- Höhere Zuverlässigkeit durch weniger Bauteile.
- Eine kompaktere Bauform der gesamten Speiseanlage ist möglich.

Der Hauptzweck dieser Anordnung von Gleichrichtern, Umrichtern, Antrieben und Regelelektronik, ist es jedoch, die im rotierenden Tambour gespeicherte Rotationsenergie (Schwungenergie) zur Ueberbrückung eines kürzeren Netzausfalles herbeizuziehen. Zu diesem Zweck wird die Zwischenkreisspannung ständig durch eine Ueberwachungseinheit E gemessen und als digitaler Wert einer (meist ohnehin vorhandenen) Mikroprozessorsteuerung µP zugeführt. Diese ist für den normalen Betriebsfall derart programmiert, dass sie bei vorgegebenen Produktionsmengen und Kardierwirkung die Antriebsmotoren auf die optimale Drehzahl regelt, um eine vorbestimmte Produkte-(Band-)qualität zu erzeugen.

Bei einem Netzausfall sinkt die Zwischenkreisspannung unter einen der Ueberwachung vorprogrammierten Schwellwert, was der Prozessorsteuerung µP gemeldet wird. Die Steuerung reduziert sofort die vorgegebene Drehzahl des Tambourmotors M1 derart, dass der Motor M1 in den generatorischen Betrieb umschaltet und beginnt, Energie in den gemeinsamen Zwischenkreis zurückzuspeisen. Die Produktion der Karde kann aufrecht erhalten werden, indem die aus dem Tambour freigesetzte Energie zur Speisung der Motoren M2, M3 und M4 ausgenutzt wird. Die abnehmende Drehzahl des Tambours, bei konstanter Produktion, führt vorerst zu einer Verschlechterung der Bandqualität aber zu keinem Unterbruch im Materialfluss.

Wenn sich diese Qualitätseinbusse als unakzeptabel erweist, kann die Produktion sofort verringert werden, indem die Drehzahlvorgaben der Motoren M2, M3 und M4 auch reduziert werden. Der Abnehmermotor M3 wird auch dann aus den motorischen in den generatorischen Betrieb umschalten und Energie in den gemeinsamen Zwischenkreis zurückspeisen. Die Steuerung der Bandablage wird daher vorzugsweise mit der Kardensteuerung verbunden, um die notwendige Koordination der Antriebe zu gewährleisten.

Das System ist insbesondere für die Anordnung nach Figur 3 beschrieben worden. Es ist aber auch mit einer Anordnung nach Figur 2 anwendbar, wobei aber eine Verbindung zwischen den Zwischenkreisen K (z.B. nach CH 581 714) vorgesehen werden muss. Der Netzausfall kann natürlich direkt am Netz (statt am Zwischenkreis) festgestellt werden.

Es ist klar, dass im diskutierten Beispiel ein Absenken der Drehzahl des Kardentambours, der in der Regel über eine Tonne wiegt, erhebliche Energiemengen freisetzt, um damit die kritischen Antriebseinheiten zu alimentieren, welche sind, an erster Stelle die Speisefunktion und an weiterer Stelle die Abnahmefunktion des Fasermaterials vor und nach dem bspw. Kardentambour.

In einer weiteren von Figur 3 abgeleiteten Ausführungsform wird die Rekuperations-Energie der Kardenmotoren nicht zur Aufrechterhaltung der Kardenfunktion, insbesondere die Speisewalze, während eines Netzausfalles benützt, wie dies nur bspw. beschrieben wurde, sondern auch für andere kritische Komponenten des Verbundes. Kritisch sind bspw. Anlageteile, die bei einem Netzausfall einen noch grösseren Produktionsausfall als einen solchen wie der Ausfall der Karden verursachen würden, wie es Ringspinnmaschinen, Ventilatoren zu Transport des Fasermaterials und andere Prozess-Strecken mit sensiblen Verarbeitungsprozeduren sind.

Theoretisch könnten solche Anlageteile durch den direkten Anschluss ihrer einzelnen Komponenten an den Zwischenkreis realisiert werden. Dem stehen jedoch praktische Erwägungen entgegen, wie bspw. zusätzliche lange Leitungswege und die Tatsache, dass nicht zwingenderweise alle kritischen Verbraucher an eine Gleichspannung angeschlossen werden können. Die praktische Lösung liegt darin, dass der Gleichrichter durch einen sogenannten Wechselrichter ersetzt wird. Durch diese Massnahme kann die aus dem mechanischen System rekuperierte Energie in das Wechselstromnetz rückgespiesen werden. Dabei müssen die unkritischen und kritischen Verbraucher an getrennte Netze angeschlossen werden, wobei das Netz für kritische Verbraucher im Falle eines Netzausfalles vom öffentlichen Netz entweder schon abgetrennt ist, oder bei einem Ausfall abgetrennt wird.

Ein solches System ist schematisch in Figur 4 dargestellt worden, wo die Karden mit 100, die "kritischen Verbraucher" mit 102 und die "unkritischen Verbraucher" mit 104 angedeutet sind. Alle Verbraucher sind an dem Netz N über eine zentrale Stromverteilung ZS angeschlossen. Die Stromverteilung ZS umfasst eine Netzausfallüberwachung NU, welche beim Netzausfall die unkritischen Verbraucher 104 von den Karden (und ihre Rückspeiseleitung RL) abtrennt.

Das Prinzip gemäss dieser Erfindung ist nicht nur mit Frequenzumrichterantrieben realisierbar, sondern auch mit AC-Servos oder Gleichstromstellern mit Zwischenkreis, welche DC-Maschinen treiben.

## Patentansprüche

1. Eine Karde mit einem von einem elektrischen Motor (M1) angetriebenen Tambour und einer von einem weiteren elektrischen Motor (M2) angetriebenen Speisewalze, **dadurch gekennzeichnet, dass** beim Ausfall der elektrischen Energieversorgung der elektrischen Motoren (M1,M2) der rotierende Tambour neben seiner Kardierfunktion mittels seiner kinetischen Energie einen Generator (M1) antreibt zur Erzeugung elektrischer Energie für mindestens den Speisewalzenmotor (M2).

2. Karde nach Anspruch 1, **dadurch gekennzeichnet, dass** der elektrische Motor (M1) zum Antreiben des Tambours beim Ausfall der elektrischen Energie als Generator dient.

3. Karde nach Anspruch 1 oder 2, **dadurch gekennzeichnet, dass** eine Abnehmerwalze mit einem dritten Antriebsmotor (M3) vorgesehen ist und vom Tambour rückgewonnene Energie auch für den Antriebsmotor (M3) der Abnehmerwalze verwendet wird.

4. Karde nach Anspruch 1, 2 oder 3, **dadurch gekennzeichnet, dass** eine Bandablage mit einem vierten Antriebsmotor (M4) vorhanden ist und vom Tambour rückgewonnener Energie auch für den Antriebsmotor (M4) der Bandablage verwendet wird.

5. Karde nach einem der vorangehenden Ansprüche, **dadurch gekennzeichnet, dass** der Motor (M1) für den Tambour mit Energie über einen Frequenzumrichter (Fig. 1) mit einem Gleichstromzwischenkreis (K) gespeist wird, und bei einem Netzausfall der Motor (M2) für die Speisewalze aus dem Zwischenkreis (K) gespeist wird.

6. Karde nach Anspruch 4 und 5, **dadurch gekennzeichnet, dass** bei einem Netzausfall auch die Motoren (M3,M4) für die Abnehmerwalze und für die Bandablage aus dem Zwischenkreis (K) gespeist wird.

7. Karde nach einem der vorangehenden Ansprüche, **dadurch gekennzeichnet, dass** eine Steuerung (µρ) vorgesehen ist, um bei einem Netzausfall die vorgegebene Drehzahl des Tambours abzusenken und die Koordination der Antriebe zu gewährleisten.

8. Karde nach Anspruch 7, **dadurch gekennzeichnet, dass** die Steuerung derart angeordnet ist, dass nach einem Netzausfall die Produktion spätestens dann reduziert wird, wenn Qualitätseinbussen sonst unakzeptabel werden.

9. Verwendung einer Karde nach einem der vorangehenden Ansprüche, **dadurch gekennzeichnet, dass** aus der Karde rückgewonnene Energie an Anlageteile ausser der Karde gespeist wird.

## Claims

1. Carding engine with a main drum driven by an electric motor (M1) and a feed roll driven by a further electric motor (M2), **characterised in that** in case of a failure in the electric power supply to the electric motors (M1, M2) the rotating main drum in addition to its carding function drives a generator (M1) using its kinetic energy for generating electric energy for at least the feed roll drive motor (M2).

2. Card according to the claim 1, **characterised in that** the electric motor (M1) driving the main drum in case of an electric power failure serves as a generator.

3. Card according to the claim 1 or 2, **characterised in that** a take-off roll is provided with a third drive motor (M3), and that energy recovered from the main drum is used also for the drive motor (M3) of the take-off roll.

4. Card according to the claim 1, 2 or 3, **characterised in that** a sliver depositing apparatus is provided with a fourth drive motor (M4), and that energy recovered from the main drum is used also for the drive motor (M4) of the sliver depositing apparatus.

5. Card according to one of the preceding claims, **characterised in that** the motor (M1) for the main drum is supplied with energy via an inverter (Fig 1) with a direct current intermediate circuit (K), and that in case of a power supply failure the motor (M2) for the feed roll is supplied from the intermediate circuit (K).

6. Card according to the claims 4 and 5, **characterised in that** in case of a power supply failure also the motors (M3, M4) for the take-off roll and for the sliver depositing apparatus are supplied from the intermediate circuit (K).

7. Card according to one of the preceding claims, **characterised in that** in case of a power supply failure, a control system (µP) is provided in order to lower, the preset rotational speed of the main drum and to ensure coordination of the drives.

8. Card according to the claim 7, **characterised in that** the control system is arranged in such a manner that after a power supply failure production is reduced at the latest moment, namely when otherwise product quality would be impaired unacceptably.

9. Application of a carding engine according to one of the preceding claims, **characterised in that** energy reclaimed from the card is supplied to plant components other than the carding engine.

## Revendications

1. Une carde possédant un tambour entraîné par un moteur électrique (M1) et un rouleau alimentaire entraîné par un autre moteur électrique (M2),
**caractérisée par le fait que**,
lors d'une panne d'alimentation en énergie électrique des moteurs électriques (M1,M2), le tambour en rotation, en plus de sa fonction de cardage, entraîne, par son énergie cinétique, un générateur (M1) pour la production d'énergie électrique pour au moins le moteur du rouleau alimentaire (M2).

2. Carde selon revendication 1,
**caractérisée par le fait que**,
lors d'une panne en énergie électrique, le moteur électrique (M1), servant à entraîner le tambour, sert comme générateur d'énergie.

3. Carde selon revendication 1 ou 2,
**caractérisée par le fait**
**qu'**un rouleau peigneur est prévu avec un troisième moteur d'entraînement (M3), et que l'énergie récupérée par le tambour est également utilisée pour le moteur d'entraînement (M3) du rouleau peigneur.

4. Carde selon revendication 1, 2 ou 3,
**caractérisée par le fait**
**qu'**une dépose de ruban est prévue avec un quatrième moteur d'entraînement (M4), et que l'énergie récupérée par le tambour est également utilisée pour le moteur d'entraînement (M4) de la dépose de ruban.

5. Carde selon l'une des revendications précédentes,
**caractérisée par le fait que**
le moteur (M1) pour le tambour est alimenté en énergie via un changeur de fréquence (figure 1) ayant un circuit intermédiaire de courant continu (K), et que, lors d'une panne de réseau, le moteur (M2) pour le rouleau alimentaire est alimenté à partir du circuit intermédiaire (K).

6. Carde selon revendications 4 et 5,
**caractérisée par le fait que**,
lors d'une panne de réseau, les moteurs (M3,M4) pour le rouleau alimentaire et pour la dépose de ruban sont également alimentés à partir du circuit intermédiaire (K).

7. Carde selon l'une des revendications précédentes,
**caractérisée par le fait que**,
lors d'une panne de réseau, une contrôle (µ P) est prévu pour diminuer le nombre de tours prédéterminé du tambour et pour garantir la coordination des entraînements.

8. Carde selon revendication 7,
**caractérisée par le fait que**
la contrôle est disposé de telle manière que, après une panne de réseau, la production est réduite au plus tard, lorsque des pertes de qualité deviennent autrement inacceptables.

9. Utilisation d'une carde selon l'une des revendications précédentes,
**caractérisée par le fait que**
l'énergie récupérée par la carde est alimentée vers des parties d'installation, autres que la carde.
